# FASCICULE DE BREVET EUROPEEN

(11) **EP 3 452 824 B1**
(45) Date de publication et mention de la délivrance du brevet: **01.05.2024**
(21) Numéro de dépôt: 17719626.8
(22) Date de dépôt: 28.04.2017
(51) Int. Cl.: G01N 33/20, G01N 31/02, G01N 35/08, B01D 17/00, G01N 1/40

(54) **PROCEDE DE CAPTURE ET/OU DE DETECTION D'UN COMPOSANT CHIMIQUE ET INSTALLATION POUR LA MISE EN OEUVRE DU PROCEDE**
VERFAHREN ZUM BESTIMMEN UND/ODER ZUM NACHWEIS EINER CHEMISCHEN SUBSTANZ UND VORRICHTUNG ZUM DURCHFÜHREN DES VERFAHRENS
METHOD OF DETERMINING AND/OR DETECTING A CHEMICAL SUBSTANCE AND APPARATUS FOR CARRYING OUT THE METHOD

(30) Priorité: 02.05.2016 FR 1653968
(43) Date de publication de la demande: 13.03.2019
(73) Titulaire: Université Claude Bernard Lyon 1, 69100 Villeurbanne (FR); Centre National de la Recherche Scientifique, 75016 Paris (FR); Institut National des Sciences Appliquées de Lyon, 69621 Villeurbanne (FR); CPE Lyon Formation Continue et Recherche, 69100 Villeurbanne (FR)
(72) Inventeur: LECLAIRE, Julien, 69620 BOIS D'OINGT (FR); POISSON, Guillaume, 21200 BEAUNE (FR); DE MERIC DE BELLEFON, Claude, 69100 VILLEURBANNE (FR); PHILIPPE, Régis, 38280 JANNEYRIAS (FR); VANOYE, Laurent, 69100 VILLEURBANNE (FR); SEPTAVAUX, Jean, 69006 Lyon (FR)
(74) Mandataire: Cabinet Becker et Associés
(86) Numéro de dépôt international: PCT/EP2017/060166
(87) Numéro de publication internationale: WO 2017/191042

(56) Documents cités:
- WO-A1-2014/188115
- FR-A1- 2 969 504
- JULIEN LECLAIRE ET AL: "CO 2 Binding by Dynamic Combinatorial Chemistry: An Environmental Selection", JOURNAL OF THE AMERICAN CHEMICAL SOCIETY, vol. 132, no. 10, 17 mars 2010 (2010-03-17), pages 3582-3593, XP055109495, ISSN: 0002-7863, DOI: 10.1021/ja909975q
- M H KIM: "FLOW-INJECTION ANALYSIS", J. KOREAN DAIRY TECHNOL. SCIENCE ASSOCIATION, vol. 21, no. 2, 1 janvier 2003 (2003-01-01), pages 77-80, XP055388295,

## Description

### DOMAINE DE L'INVENTION

La présente invention a trait au domaine des procédés de capture et/ou de détection d'éléments chimiques présents dans un échantillon donné.

Ce procédé trouve un intérêt particulier dans la pré-purification, le raffinage ou encore la séparation des métaux dits « stratégiques », tels que notamment les terres rares qui sont issues de minerais ou de déchets technologiques.

L'invention concerne, en outre, une installation mettant en oeuvre ledit procédé.

### ETAT ANTERIEUR DE LA TECHNIQUE

Aujourd'hui, les métaux tels que les terres rares ou encore les actinides font l'objet d'une demande croissante de la part des industriels. En effet, ils sont largement utilisés pour de nombreuses applications technologiques, notamment de pointe, telles que les batteries ou encore les aimants. Ainsi, le développement de procédés de recyclage de ces métaux apparaît comme un enjeu important.

A la connaissance du Demandeur, deux classes de procédés continus de capture et séparation des métaux stratégiques ont été développées au cours de ces dernières années.

La première concerne un procédé biphasique d'extraction liquide-liquide. Ce procédé repose sur la technologie d'extraction liquide-liquide entre une phase aqueuse et une coupe pétrolière au moyen d'un tensioactif de synthèse. Ce procédé présente, toutefois, de nombreux inconvénients que sont :
- son faible rendement ;
- son coût relativement important ;
- son caractère énergivore ; et au demeurant
- son fort impact environnemental.

La seconde concerne un procédé qui repose sur la technologie de chromatographie d'affinité. Un support solide est greffé chimiquement par une molécule sélectrice et le support solide est déterminé selon la nature des métaux à séparer. Les métaux sont adsorbés sélectivement sur le support solide en fonction de la nature de leur greffage. La séparation est réalisée par hydrolyse à l'aide d'une solution fortement saline, acide ou basique. Ce procédé bien qu'efficace est très coûteux et nécessite la mise en oeuvre d'effluents agressifs.

Le document WO 2014/188115 décrit un procédé adapté pour la détection, la capture et/ou le relargage sélectif d'éléments chimiques choisis parmi les métaux pauvres, les alcalins, les alcalino-terreux, les actinides et les terres rares. Ce procédé met en oeuvre un assemblage moléculaire formé d'au moins une amine, et au moins un aldéhyde et/ou une imine et/ou du CO₂, ou un adduit formé par la mise en contact d'une amine et de CO₂, et au moins un de ces éléments chimiques. A l'issue de ce procédé, on récupère un précipité à partir duquel le métal peut être récupéré. Bien que ce procédé présente des avantages indéniables du point de vue économique, il reste souhaitable de l'optimiser pour pouvoir le mettre en oeuvre à l'échelle industrielle.

### RESUME DE L'INVENTION

Le problème que se propose de résoudre l'invention est donc de mettre au point un procédé industriel de capture et/ou détection de métaux dits stratégiques, types terres rares et actinides, à partir d'un échantillon.

Pour résoudre ce problème, l'invention propose un procédé dans lequel les réactifs organiques et les métaux précités sont mis en contact dans des conditions particulières générant un écoulement segmenté qui permet une capture en continu des métaux, et l'étape ultérieure éventuelle de relargage est également optimisée.

Un tel procédé présente une productivité plus élevée (à degré de pureté égal) et éventuellement une meilleure sélectivité que le procédé discontinu précité, permettant ainsi son utilisation à l'échelle industrielle.

L'invention concerne ainsi un procédé de capture et/ou détection d'au moins un élément chimique dans un échantillon, comprenant les étapes suivantes :
a) on prépare une phase liquide L comprenant au moins :
   - une amine;
   - un échantillon comprenant au moins un élément chimique choisi dans le groupe comprenant les métaux pauvres, les alcalino-terreux, les actinides, les terres rares, les métaux de transition, et leur combinaison;
   - éventuellement un solvant;
b) on met en contact la phase liquide L avec une phase gazeuse G comprenant un gaz choisi parmi CO₂, COS et CS_{2,} dans des conditions entraînant la formation d'un écoulement segmenté, de sorte à former une troisième phase concentrant ledit élément chimique, dite « phase concentrée », en suspension dans une solution-mère ;
c) on sépare la phase concentrée de la solution-mère.

L'invention a également pour objet l'utilisation du procédé ci-dessus pour séparer des éléments chimiques différents ou pour détecter la présence ou non d'éléments chimiques au sein d'un échantillon.

Elle a encore pour objet une installation pour la mise en oeuvre du procédé ci-dessus, comprenant :
- une unité de stockage d'une phase liquide L comprenant au moins :
   - une amine ;
   - un échantillon comprenant au moins un élément chimique choisi parmi les métaux pauvres, les alcalino-terreux, les actinides, les terres rares, les métaux de transition, et leur combinaison ;
   - éventuellement un solvant ;
- une unité de stockage d'une phase gazeuse G comprenant avantageusement du CO₂,
- une unité de réaction alimentée par deux entrées, respectivement une entrée de phase liquide L depuis l'unité de stockage de phase liquide L, et une entrée de phase gazeuse G depuis l'unité de stockage de phase gazeuse G, l'unité de réaction comprenant un micro-mélangeur, constitué d'une chambre de micro-mélange et de segmentation, connecté à une conduite tubulaire en sortie du micro-mélangeur,
- un moyen d'alimentation en continu en phase liquide L de l'unité de réaction,
- un moyen d'alimentation en continu en phase gazeuse G de l'unité de réaction,
- un moyen de séparation connecté à la sortie de la conduite tubulaire.

### BREVE DESCRIPTION DES FIGURES

La Figure 1 représente deux écoulements segmentés, respectivement de type biphasique et de type triphasique.
La Figure 2 illustre un appareillage utilisé pour mettre en oeuvre le procédé selon l'invention.
Les Figures 3A et 3B montrent respectivement la sélectivité de capture obtenue selon l'invention, et la sélectivité globale du procédé selon l'invention, après que la phase concentrée ait ou non été soumise à un ou plusieurs cycles de lavage à l'aide de différentes solutions de lavage.

### DESCRIPTION DETAILLEE

Le procédé selon l'invention comprend une étape de capture en continu d'un élément chimique, qui se caractérise par la formation d'un écoulement segmenté.

L'écoulement segmenté ou écoulement de TAYLOR est bien connu et décrit précisément dans les documents Taylor, G. Journal Of Fluid Mechanics Volume: 10 Issue: 2 (1961-01-01) p. 161-165.) ou encore Kreutzer, M. T., Kapteijn, F., Moulijn, J. A., Heiszwolf, J.J., Chem. Eng. Sci., 60, 5895-5916, 2005. Son application à la production d'un solide est par ailleurs décrit dans le brevet US-6,458,335.

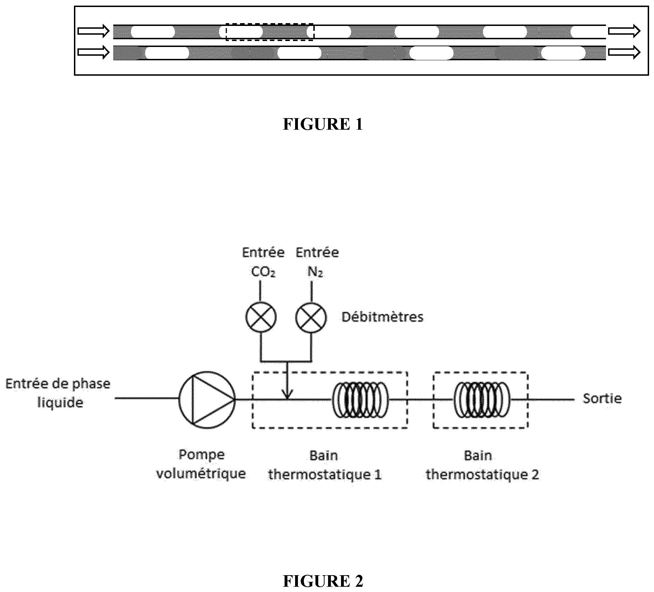

Il s'agit d'un type particulier d'écoulement piston, dans lequel au moins deux phases fluides non miscibles sont mises en contact dans des conditions permettant de générer un écoulement constitué de segments constitués du mélange de réactifs contenus dans la première phase fluide, généralement un liquide, séparés les uns des autres par des segments constitués des autres phases fluides, notamment gazeuses. Ces différents segments occupent la quasi-intégralité de la section droite de la conduite dans laquelle ils s'écoulent et s'enchaînent de façon régulière, comme illustré à la Figure 1 qui montre respectivement un écoulement biphasique et un écoulement triphasique.

L'homme de l'art sait ajuster la section de la conduite, son diamètre hydraulique, le dispositif d'injection des fluides et la gamme des débits volumiques des différentes phases pour obtenir ce type d'écoulement.

Un tel écoulement segmenté peut notamment permettre la production de poudre en continu. Dans le cas particulier de la présente invention, deux phases fluides non miscibles sont mises en contact et la seconde phase fluide, qui est gazeuse, a la particularité de réagir avec les réactifs présents dans la première phase fluide, qui est liquide, pour former la poudre attendue.

Le procédé selon l'invention met ainsi en oeuvre trois phases non miscibles : une phase liquide L et une phase gazeuse G destinées à former une phase concentrée solide.

Plus précisément, la phase liquide L comprend au moins:
- une amine ;
- un élément chimique à séparer quelle que soit la forme sous laquelle il est introduit ;
- éventuellement un solvant.

Une amine selon l'invention est un composé comprenant au moins une, de préférence deux ou trois fonctions amine primaire ou secondaire, et éventuellement au moins une fonction amine tertiaire. L'amine selon l'invention peut être de formule générale R2-NH-R3, dans laquelle R2 est choisi parmi les groupes alkyles, alcényles, alcynyles, cycloalkyles, cycloalcényles, cycloalcynyles et les groupes aromatiques, dont la chaîne hydrocarbonée est éventuellement interrompue par au moins un hétéroatome choisi parmi N, O et S, et éventuellement substituée par au moins un substituant, lequel substituant ne comprend de préférence pas d'aldéhyde ; R3 est choisi parmi un atome d'hydrogène, les groupes alkyles, alcényles, alcynyles, cycloalkyles, cycloalcényles, cycloalcynyles et les groupes aromatiques, dont la chaîne hydrocarbonée est éventuellement interrompue par au moins un hétéroatome choisi parmi N, O et S, et éventuellement substituée par au moins un substituant. De préférence, les substituants ne comprennent indépendamment pas d'aldéhyde.

Avantageusement, l'amine comprend au moins deux fonctions amines, de préférence au moins trois, voire au moins quatre ou au moins cinq fonctions amines. En particulier, l'amine est telle que R3 est un atome d'hydrogène et R2 est un groupe alkyle dont la chaîne hydrocarbonée est interrompue par au moins un atome d'azote.

De préférence, une amine selon l'invention est choisie parmi les composés suivants :

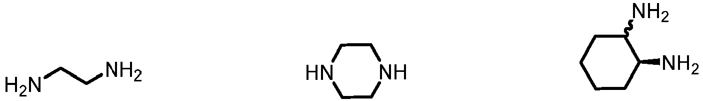

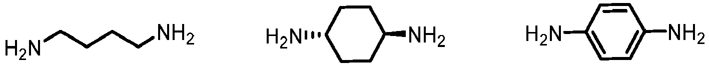

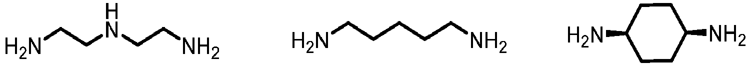

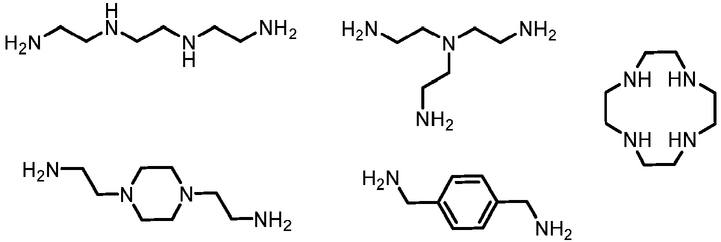

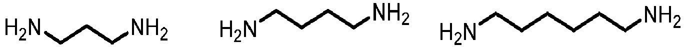

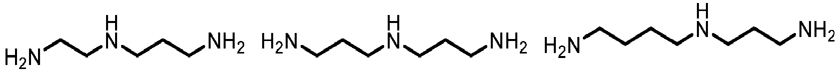

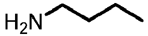

Dans un mode de réalisation préféré, l'amine est choisie parmi l'éthylène diamine, la diéthylènetriamine, la triéthylènetétramine et la tris-(2-aminoéthyl)amine. La diéthylènetriamine (DETA) est particulièrement préférée pour une utilisation dans la présente invention.

Bien que plusieurs des amines décrites ci-dessus puissent être utilisées dans le procédé selon l'invention, on préfère qu'une seule amine soit mise en oeuvre. L'expression "une amine" ou "l'amine" employée dans cette description doit être comprise comme signifiant "une ou plusieurs amines".

L'échantillon sur lequel le procédé de détection et/ou capture selon l'invention est mis en oeuvre peut être n'importe quel type d'échantillon susceptible de comprendre un ou plusieurs éléments chimiques. Il peut s'agir d'un échantillon de toute origine.

Cet échantillon peut se présenter sous une forme liquide ou encore solide. Dans l'hypothèse d'un échantillon solide, contenant en particulier un ou plusieurs sels métalliques, il est transformé à l'état liquide par solubilisation, soit en amont du procédé selon l'invention, soit lors de la formation de la phase liquide L utilisée selon l'invention.

Selon l'invention, l'élément chimique est choisi dans le groupe comprenant les métaux pauvres, les alcalino-terreux, les actinides, les terres rares, les métaux de transition.

Dans le cadre de la présente invention, les métaux pauvres désignent les éléments métalliques du bloc p du tableau périodique. Le groupe des métaux pauvres comprend l'Aluminium ₁₃Al, le Gallium ₃₁Ga, l'Indium ₄₉In, l'Étain ₅₀Sn, le Thallium ₈₁Tl, le Plomb ₈₂Pb, le Bismuth ₈₃Bi, le Polonium ₈₄Po et le Flérovium ₁₁₄Fl.

Dans le cadre de la présente invention, les alcalino-terreux désignent les éléments de la deuxième colonne du tableau périodique. Le groupe des alcalino-terreux comprend le béryllium ₄Be, le magnésium ₁₂Mg, le calcium ₂₀Ca, le strontium ₃₈Sr, le baryum ₅₆Ba et le radium ₈₈Ra.

Dans le cadre de la présente invention, les actinides désignent l'actinium ₈₉Ac, le thorium ₉₀Th, le protactinium ₉₁Pa, l'uranium ₉₂U, le neptunium ₉₃Np, le plutonium ₉₄Pu, l'américium ₉₅Am, le curium ₉₆Cm, le berkélium ₉₇Bk, le californium ₉₈Cf, l'einsteinium ₉₉Es, le fermium ₁₀₀Fm, le mendélévium ₁₀₁Md, le nobelium ₁₀₂No, et le lawrencium ₁₀₃Lr.

Dans le cadre de la présente invention, les terres rares désignent le scandium ₂₁Sc, l'yttrium ₃₉Y et les quinze lanthanides. Les lanthanides désignent le lanthane ₅₇La, le cérium ₅₈Ce, le praséodyme ₅₉Pr, le néodyme ₆₀Nd, le prométhium ₆₁Pm, le samarium ₆₂Sm, l'europium ₆₃Eu, le gadolinium ₆₄Gd, le terbium ₆₅Tb, le dysprosium ₆₆Dy, l'holmium ₆₇Ho, l'erbium ₆₈Er, le thulium ₆₉Tm, l'ytterbium ₇₀Yb et le lutétium ₇₁Lu.

Dans le cadre de la présente invention, les métaux de transition désignent les éléments du bloc d. Il s'agit des 38 éléments des périodes 4 à 7 et des groupes 3 à 12 hormis le lutécium ₇₁Lu et le lawrencium ₁₀₃Lr.

En pratique, l'échantillon peut-être, selon les applications, composé d'un seul et unique élément chimique, d'une pluralité d'éléments chimiques de même nature ou encore d'une combinaison d'éléments chimiques de nature différente.

Selon un mode de réalisation particulier, l'échantillon est avantageusement composé d'éléments chimiques choisis parmi les métaux du bloc f (lanthanides et actinides) et les métaux du bloc d et leur combinaison.

Dans un mode de réalisation particulier, l'échantillon contient exclusivement des éléments chimiques appartenant au bloc f. A titre d'exemple, l'échantillon contient deux éléments chimiques appartenant au bloc f, à savoir le praséodyme et le néodyme ou le lanthane et le dysprosium.

Dans un autre mode de réalisation, l'échantillon contient exclusivement au moins un élément chimique appartenant au bloc f, tel que le samarium (Sm), le néodyme (Nd), le lanthane (La), le dysprosium (Dy), l'yttrium (Y) et au moins un élément chimique appartenant au bloc d, tel que le cobalt (Co), le fer (Fe) et le nickel (Ni).

L'élément chimique se trouve généralement sous forme d'oxyde, de carbonate ou de phosphate métallique, voire de métal au degré d'oxydation zéro, dans l'échantillon mis en oeuvre selon l'invention. Il doit dans ce cas être préalablement converti sous forme de sel soluble dans l'eau ou les solvants organiques. Ce sel a pour formule Mⁿ⁺Xⁿ⁻ où M est le métal considéré et Xⁿ peut être tout anion de nature organique ou inorganique. Ce sel peut être formé *in situ* dans la phase liquide L lorsque celle-ci renferme, outre l'élément chimique, un acide de formule HₙX. On pourra ainsi par exemple inclure dans la phase liquide L un acide organique, tel que l'acide trifluoroacétique, nitrique ou chlorhydrique, pour former *in situ* un sel de trifluoroacétate, de nitrate ou de chlore de l'élément chimique, respectivement.

Le procédé est avantageusement conduit en présence de solvant. Il a en effet été observé que la dilution du mélange réactionnel permettait d'améliorer la sélectivité du procédé, c'est-à-dire l'efficacité de séparation des métaux. Le solvant peut être organique ou aqueux. Il s'agit avantageusement d'un solvant choisi dans le groupe comprenant l'eau, le méthanol, l'éthanol, le bioéthanol, l'acétonitrile, le diméthylsulfoxide (DMSO), le diméthylformamide (DMF), le diméthylacétamide (DMA), le nitrométhane et leurs combinaisons.

Bien que plusieurs des solvants décrits ci-dessus puissent être utilisés dans le procédé selon l'invention, on préfère qu'un seul solvant soit mis en oeuvre. L'expression "un solvant" ou "le solvant" employée dans cette description doit être comprise comme signifiant "un ou plusieurs solvants".

La phase liquide L est de préférence constituée uniquement de l'amine, de l'échantillon contenant au moins un élément chimique et éventuellement du solvant et/ou d'un acide.

En ce qui concerne la phase gazeuse G, elle renferme, est constituée, de CO₂ ou en variante de CS₂ ou COS.

Avant mise en contact des phases gazeuse G et liquide L :
- dans la phase liquide L :
   - la concentration molaire en amine peut être comprise entre 10⁻³ et 20 mol/L, avantageusement comprise entre 10⁻² et 2 mol/L ;
   - la concentration molaire en élément chimique peut être comprise entre 10⁻⁵ et 7 mol/L, avantageusement comprise entre 5.10⁻⁵ et 0.67 mol/L ;
- et/ou dans la phase gazeuse G:
   - la pression partielle en gaz, avantageusement CO₂, peut être comprise entre 0,1 bar et la pression critique à la température T de travail, avantageusement comprise entre 0,1 et 10 bar.

Au cours de l'étape de mise en contact de la phase liquide L avec la phase gazeuse G, par exemple par injection de la phase gazeuse G dans la phase liquide L, la température est généralement comprise entre -78 et 150°C, avantageusement comprise entre -20 et 50°C. De préférence, l'étape d'injection de la phase gazeuse G est réalisée à température ambiante, soit 25 ± 5°C.

On préfère dans cette invention que l'amine soit en excès molaire par rapport au métal, de préférence le rapport molaire amine/métal est compris entre 2:1 et 96 :1, plus préférentiellement entre 2:1 et 20 :1, par exemple entre 10 :1 et 15 :1. En outre, le rapport molaire du CO₂ à l'amine est généralement compris entre 0,1:1 et 2 :1 et il est préférentiellement de 0,3:1 à 0,5:1.

Dans la suite de la description et dans les revendications, on désigne par « vitesse superficielle d'écoulement de la phase i ou "V_{s,i} », le rapport entre le débit volumique Qi de la phase i et la section S du réacteur, i pouvant être une phase liquide L ou une phase gazeuse G.

Ainsi, le procédé est avantageusement mis en oeuvre dans les conditions suivantes:
- la vitesse superficielle d'écoulement de la phase liquide L, V_{s,L}, est comprise entre 1 µm/s et 10 m/s, avantageusement comprise entre 100 µm/s et 1 m/s;
- la vitesse superficielle d'écoulement de la phase gazeuse G, V_{s,G}, est comprise entre 1 µm/s et 10 m/s, avantageusement comprise entre 100 µm/s et 1 m/s.

La phase concentrée qui se forme peut se trouver sous forme liquide ou préférentiellement sous forme de poudre. Elle contient un complexe chimique formé par l'élément chimique, l'amine et le gaz réactif (CO2, COS ou CS2). En pratique, on préfère que l'élément chimique à séparer se lie avec un ou des adduits obtenus *in situ* entre l'amine et le gaz réactif par coordination.

Plus préférentiellement, lorsque le gaz réactif est CO₂, le solide formé est un complexe métallique de carbamate d'amine. Ce solide renferme sensiblement tout le CO₂ mis en oeuvre et une partie de l'amine utilisée (par exemple dans un ratio CO₂/amine de 2 :1), l'autre partie de l'amine se trouvant dans la phase liquide avec une quantité minime ou nulle de CO₂ et avec le ou les métaux présentant une constante d'association plus faible avec l'adduit d'amine et de CO₂ que le métal complexé.

A ce stade, le procédé selon l'invention peut éventuellement inclure une étape intermédiaire b') de recuit, consistant à chauffer, par exemple à 50-60°C, le solide pour le dissoudre partiellement ou totalement et à le reprécipiter. Cette étape permet d'augmenter la sélectivité du procédé.

L'étape c) de séparation permet ensuite d'isoler la phase concentrée (généralement le solide). La séparation de la phase concentrée peut être conduite, soit en continu, soit en discontinu.

La solution-mère renfermant le solvant lorsqu'il est présent, l'amine n'ayant pas réagi et/ou les métaux non capturés et éventuellement le gaz peut être récupérée partiellement ou totalement et être réinjectée en amont du procédé, avant l'étape b). La solution-mère peut en variante être traitée pour récupérer les métaux qu'elle renferme.

De manière générale, l'étape de séparation peut être réalisée par des techniques connues de l'homme du métier. Elle peut être avantageusement réalisée par décantation, filtration, tamisage, centrifugation, évaporation et/ou distillation. Dans le cas où la phase concentrée est un liquide, la séparation peut aussi être réalisée par des processus basés sur l'utilisation des forces capillaires. L'homme du métier saura adapter les paramètres de l'étape de séparation de manière à obtenir une séparation optimale. Dans le cas par exemple d'une séparation par filtration, l'homme du métier sait déterminer la nature du filtre et/ou la taille des pores. De la même manière, dans le cas d'une séparation par centrifugation, l'homme du métier sera apte à déterminer les paramètres tels que la vitesse de centrifugation afin d'obtenir le résultat désiré.

Après l'étape de séparation, il est alors possible de réaliser une étape supplémentaire de relargage, ou étape d), des éléments chimiques présents dans la phase concentrée. Cette étape peut être mise en oeuvre de manière continue ou non. Elle consiste à détruire la phase concentrée par dissociation chimique, de manière à reformer les espèces chimiques qui ont originellement contribué à sa formation et que l'on cherche éventuellement à réutiliser en les réintroduisant dans l'étape b). En d'autres termes, l'étape de relargage permet de récupérer l'amine, l'élément chimique et éventuellement le CO₂ ou leurs dérivés dans certains cas. L'expression « dérivés» désigne un dérivé chimique de l'amine, à partir duquel l'homme du métier sait reformer l'amine.

Dans un premier mode de réalisation, l'étape d) de relargage est réalisée par hydrolyse et chauffage. On procède dans ce cas à un relargage total, non sélectif, des éléments chimiques présents dans l'échantillon traité.

L'hydrolyse est réalisée par mise en suspension de la phase concentrée dans une solution de relargage comprenant l'amine, la même amine mais protonée et accompagnée d'un contre-ion, et le cas échéant un solvant, dans des proportions identiques à celles présentes dans la solution-mère après séparation de la phase concentrée.

La solution de relargage peut correspondre à une solution mère obtenue après l'étape de séparation de la phase concentrée. Dans ce cas, elle renferme également les éléments chimiques non capturés, dans une proportion identique à celle dans laquelle ils se trouvent dans le précipité. On préfère toutefois que la solution de relargage soit constituée d'une solution neuve, reproduisant les caractéristiques de la solution mère mais ne renfermant pas d'éléments chimiques non capturés. L'homme du métier saura mesurer les quantités d'éléments chimiques et d'amine dans la solution-mère pour préparer une solution neuve de relargage présentant ces caractéristiques.

Dans un mode de réalisation particulier, l'amine protonée est un sel d'ammonium, en pratique un sel d'ammonium de l'amine de la phase liquide L qui est formé par protonation de cette amine par les ions H⁺ produits lors de sa réaction avec le gaz réactif. Cette amine protonée a pour structure R-NH₃⁺X⁻, où X⁻ désigne l'anion présent dans le sel d'élément chimique contenu dans l'échantillon introduit dans la phase liquide L. Cette amine protonée est susceptible de réagir avec le complexe formé, de formule M⁺RNCOO⁻, où M désigne l'élément chimique capturé, pour reformer, par échange d'ions, le sel M⁺X⁻ et dans le même temps régénérer l'amine RNH₂ et libérer le CO₂.

La suspension du complexe dans la solution de relargage est chauffée à une température qui dépend notamment de la température d'ébullition du solvant et est généralement inférieure ou égale à 100 °C, de préférence comprise entre 35 et 65°C.

Dans tous les cas, le Demandeur a constaté que pour permettre le relargage effectif du ou des éléments chimiques présents dans la phase concentrée après séparation, il est avantageux, pendant l'étape de relargage, que le rapport de la quantité molaire totale d'amine à la quantité molaire totale d'éléments chimiques soit compris entre 3 et 128, avantageusement compris entre 6 et 24. On désigne par « quantité molaire totale d'amine», la somme des amines présentes dans la phase concentrée, autrement dit celles ayant complexé avec les éléments chimiques, et des amines non complexées, composées d'un mélange d'amines protonées et/ou d'amines non protonées, lesquelles sont présentes dans la solution de relargage (solution mère ou solution neuve). De même, on désigne par « quantité molaire totale d'éléments chimiques », les éléments chimiques présents dans la phase concentrée.

Dans un autre mode de réalisation de l'invention, l'étape de relargage peut être une étape de relargage sélectif par lavage réactif, consistant à laver la phase concentrée à l'aide d'un solvant choisi parmi ceux cités précédemment. Dans une variante de cette forme d'exécution, le solvant peut contenir au moins une amine choisie parmi celles décrites précédemment et éventuellement un gaz réactif tel que décrit ci-dessus, de préférence le CO₂. En sélectionnant les constituants de la solution de lavage et leurs proportions respectives, il est possible de favoriser le rendement du procédé ou sa sélectivité. Il a été observé qu'un bon compromis entre rendement et sélectivité est obtenu lorsque la solution de lavage renferme les trois constituants précités (solvant, amine et CO₂), dans un rapport molaire du CO₂ à l'amine de 1 :20 à 1 :3, de préférence de 1 :15 à 1 :5, par exemple de 1 : 10. Il est possible d'effectuer un ou plusieurs cycles de lavage de la phase concentrée, le nombre de lavage pouvant varier entre 1 et 6, de préférence entre 2 et 3. Plus préférentiellement, la phase concentrée est lavée trois fois.

Cette étape de lavage réactif permet, en jouant sur la constante de dissociation du complexe métallique présent dans la phase concentrée et éventuellement sur la constante d'association des métaux lixiviés avec l'adduit apporté par la solution de lavage, de séparer plus finement les métaux capturés pour obtenir, d'une part, un solide renfermant un complexe métallique unique et, d'autre part, des eaux de lavage contenant les métaux non complexés. Il est ainsi possible de séparer les terres rares (qui resteront dans le solide) des métaux de transition (qui auront plus d'affinité pour la solution de lavage), par exemple.

Selon un mode de réalisation particulier, les éléments chimiques relargués, ou les eaux de lavage, peuvent être réinjectés au cours de l'étape b), dans la phase liquide L, de manière à procéder à une étape de purification supplémentaire. Le procédé incluant le recyclage des réactifs est ainsi conduit en continu et en circuit fermé pour obtenir un élément chimique de plus en plus pur.

Le solide purifié ainsi obtenu, ou le solide issu de l'étape de lavage réactif, peut ensuite être traité pour transformer le complexe métallique de carbamate d'amine qu'il contient en un oxyde ou carbonate de métal. Cette étape de traitement peut consister en une calcination du solide, éventuellement après évaporation du solvant et/ou récupération du CO₂ libéré. Le solvant peut ainsi être recyclé dans le procédé. Dans une variante préférée de l'invention, cette étape de traitement comprend l'ajout d'un co-solvant qui est miscible avec le solvant précité et peu polaire, de façon à faire précipiter les sels métalliques et à les séparer ensuite, notamment par centrifugation, de l'amine en solution. L'amine peut ainsi être recyclée dans le procédé. Un exemple d'un tel co-solvant est le diéthyléther.

Comme déjà dit, le procédé peut être utilisé non seulement pour séparer des éléments chimiques différents - en jouant sur leur compétitivité de complexation -, mais également pour détecter la présence ou non d'éléments chimiques au sein d'un échantillon donné. La formation de la phase concentrée caractérise ainsi la présence d'éléments chimiques dans l'échantillon analysé.

La mise en oeuvre du procédé précédemment décrit nécessite en pratique une installation qui constitue un autre objet de l'invention.

L'installation selon l'invention comprend :
- une unité de stockage d'une phase liquide L,
- une unité de stockage d'une phase gazeuse G,
- une unité de réaction,
- un moyen d'alimentation en continu en phase liquide L de l'unité de réaction,
- un moyen d'alimentation en continu en phase gazeuse G de l'unité de réaction,
- un moyen de séparation.

L'unité de réaction comprend précisément un micro-mélangeur connecté à un réacteur tubulaire. Le micro-mélangeur est alimenté séparément par la phase liquide L contenant les réactifs et par la phase gazeuse G, éventuellement au moyen de pompes péristaltiques ou de vannes pneumatiques. Des détendeurs et débitmètres régulateurs peuvent être prévus pour permettre l'alimentation contrôlée des fluides. Le micro-mélangeur assure le mélange des réactifs - contenus dans la phase liquide L et éventuellement dans la phase gazeuse G - et la segmentation du mélange réactionnel ainsi obtenu, de manière à former de petites sections identiques de mélange réactionnel (ou micro-réacteurs) séparées par de petits volumes de phase gazeuse G. Le micro-mélangeur comprend une chambre de micro-mélange et de segmentation, qui peut éventuellement comprendre une zone de micro-mélange et une zone de segmentation distinctes. Le micro-mélangeur a généralement une forme de T ou en croix. Les débits d'alimentation en phase liquide L et en phase gazeuse G, ainsi que la forme et le diamètre interne du micro-mélangeur, sont choisis pour produire la segmentation recherchée. L'homme du métier saura ajuster ces paramètres opératoires pour obtenir un écoulement segmenté. Le fluide gazeux assure ainsi la progression des petits volumes individuels du mélange réactionnel jusque dans le réacteur tubulaire, en évitant tout rétromélange. Au sein du réacteur tubulaire, la réaction qui se produit dans les micro-réacteurs, et/ou à l'interface entre les micro-réacteurs et la phase gazeuse G, entraîne la formation d'un précipité (ici, un complexe métallique) sous forme de particules pulvérulentes. Le diamètre interne du tube peut être choisi en fonction du débit d'écoulement et du temps de résidence voulus. Un dispositif de contrôle de pression ou "déverseur" peut éventuellement être disposé en aval du réacteur tubulaire.

Dans un mode de réalisation particulier, l'unité de réaction comporte un contacteur pouvant se présenter par exemple sous la forme d'un T dont deux des extrémités ou entrées sont connectées aux moyens d'alimentation en phase gazeuse G et liquide L, respectivement.

On notera que l'unité de réaction précitée, permettant l'obtention d'un écoulement segmenté, se différencie notamment des cuves agitées et colonnes à bulles par la surface spécifique de transfert gaz-liquide (1500-15000 m² par m³ de mélange réactionnel) et par la surface spécifique d'échange thermique (500-3000 m² de paroi par m³ de réacteur). Elle permet surtout une maîtrise précise du temps de séjour dans le réacteur. Ces caractéristiques découlent en particulier du fait que l'unité de réaction comporte des tubes dont le diamètre hydraulique est inférieur à la longueur capillaire et présente préférentiellement :
- un diamètre hydraulique compris entre 50 µm et 5 mm, avantageusement compris entre 300 µm et 3 mm;
- une longueur comprise entre 1 cm et 50 m, avantageusement comprise entre 10 cm et 3 m.

Selon un mode de réalisation particulier, plusieurs unités de réaction identiques ou différentes peuvent être assemblées en parallèle de manière à augmenter la capacité de production.

Conformément au procédé décrit, l'installation comprend également un dispositif adapté pour séparer la phase concentrée de la solution mère.

Dans l'hypothèse où la phase concentrée se présente sous forme solide, il peut s'agir d'un décanteur, auquel cas la phase concentrée se présente sous la forme d'un solide imprégné après séparation, ou alors d'un filtre, auquel cas la phase concentrée se présente sous la forme d'un solide sec après séparation.

Comme expliqué précédemment, le procédé peut également mettre en oeuvre une étape de relargage, qui correspond à la dissociation du complexe pour reformer les espèces qui ont originellement contribué à sa formation. Dans ce cas, l'installation comprend, en outre, un dispositif quelconque, adapté au chauffage d'une suspension, avantageusement un tube capillaire chauffé et/ou soumis au rayonnement micro-ondes et/ou soumis aux ultrasons, dans lequel s'écoule la phase concentrée, connecté à un dispositif de filtration et/ou de décantation.

L'invention sera mieux comprise à la lumière des exemples suivants qui sont fournis à titre purement illustratif.

### EXEMPLES DE REALISATION DE L'INVENTION

### Exemples 1-1 à 1-10

On a utilisé l'appareillage illustré à la Figure 2 pour séparer en continu, suivant le procédé de l'invention, différents couples métalliques.

Une solution de diéthylènetriamine (DETA) et de sels métalliques dans le méthanol a été injectée au moyen d'une pompe volumétrique dans un réacteur (contacteur capillaire de 0,32 cm diamètre et de 1,2 m de long) composé de deux segments de tubes de PFA (1/8) immergés dans deux bains thermostatiques dont la température était ajustée de manière indépendante. Un mélange de dioxyde de carbone (CO₂) et d'azote (N₂), dont les débits respectifs étaient ajustés au moyen de deux débitmètres, a été préchauffé et ajouté aux réactifs au moyen d'un mélangeur en T, à une température T1 (température du bain thermostatique 1). Une précipitation s'est produite lors de l'ajout de CO₂ et le solide a été transporté dans le réacteur. Le second bain thermostatique (de température T2) était destiné à redissoudre et reprécipiter le solide (recuit).

La suspension solide / liquide a été collectée, les phases ont été séparées par centrifugation et la phase solide a été lavée plusieurs fois avec du méthanol. Les phases liquides ont été collectées et les phases solides et liquides ont été séchées sous vide. Des analyses par spectrométrie d'émission optique à plasma induit (ICP-OES) ont ensuite été réalisées pour calculer le rapport atomique de métal dans le solide et la sélectivité globale du procédé de capture / séparation / lavage.

Les paramètres opératoires choisis et les résultats obtenus sont rassemblés dans le tableau ci-dessous.

| **Ex. n°** | **1** | **2** | **3** | **4** | **5** |
|---|---|---|---|---|---|
| **Concentration DETA** | 0.5 M | 0.5 M | 0.5 M | 0.5 M | 0.5 M |
| **Sel de M1** | SmCl₃, 7 mM | Nd(O₂C₂F₃)₃, 21 mM | Nd(O₂C₂F₃)₃, 21 mM | Nd(O₂C₂F₃)₃, 21 mM | Nd(O₂C₂F₃)₃, 21 mM |
| **Sel de M2** | CoCl₂, 35 mM | Fe(O₂C₂F₃)₃, 21 mM | Fe(O₂C₂F₃)₃, 21 mM | Fe(O₂C₂F₃)₃, 21 mM | Fe(O₂C₂F₃)₃, 21 mM |
| **Débit liquide** | 0.5 mL.min⁻¹ | 2.4 mL.min⁻¹ | 2 mL.min⁻¹ | 2 mL.min⁻¹ | 4.5 mL.min⁻¹ |
| **Débit massique CO₂** | 15 mg.min⁻¹ | 8 mg.min⁻¹ | 33 mg.min⁻¹ | 33 mg.min⁻¹ | 20 mg.min⁻¹ |
| **Débit massique N₂** | | | | | |
| **T₁** | 20°C | 20°C | 20°C | 20°C | 30°C |
| **T₂** | 20°C | 20°C | 20°C | 65°C | 30°C |
| **Nb lavages** | 2 | 2 | 3 | 3 | 3 |
| **M₁/M_{2*} Sélectivité globale**** | **51.7** | **18.6** | **4.3** | **13.1** | **3.7** |
| | **846** | **107** | **24** | **111** | **86** |

| **Ex. n°** | 6 | 7 | 8 | 9 | 10 |
|---|---|---|---|---|---|
| **Concentration DETA** | 0.5 M | 2M | 0.2 M | 0.5 M | 0.5 M |
| **Sel de M1** | Nd(O₂C₂F₃)₃, 21 mM | Nd(O₂C₂F₃)₃, 170 mM | La(O₂C₂F₃)₃, 170 mM | Y(O₂C₂F₃)₃, 21 mM | LaCl₃, 21 mM |
| **Sel de M2** | Fe(O₂C₂F₃)₃, 21 mM | Fe(O₂C₂F₃)₃, 170 mM | Dy(O₂C₂F₃)₃, 170 mM | CoCl₂, 21 mM | NiCl₂, 21 mM |
| **Débit liquide** | 2 mL.min⁻¹ | 0.5 mL.min⁻¹ | 4.5 mL.min⁻¹ | 1.2 mL.min⁻¹ | 2.5 mL.min⁻¹ |
| **Débit massique CO₂** | 18.7 mg.min⁻¹ | 9 mg.min⁻¹ | 8 mg.min⁻¹ | 40 mg.min⁻¹ | 40 mg.min⁻¹ |
| **Débit massique N₂** | - | 22 mg.min⁻¹ | 20 mg.min⁻¹ | - | - |
| **T₁** | 20°C | 0°C | 60°C | 20°C | 20°C |
| **T₂** | 20°C | 20°C | 20°C | 20°C | 20°C |
| **Nb lavages** | 2 | 3 | 3 | 2 | 2 |
| **M₁/M_{2*}** | **14.4** | **8.39** | **1.06** | **44.8** | **9198** |
| **Sélectivité globale**** | **161** | **236** | **1.18** | **113.9** | **58505** |

| | | | | | |
|---|---|---|---|---|---|
| * Rapport atomique dans le solide après lavage ** Sélectivité globale = Rapport des coefficients de partage solide/liquide de M1 et M2 | | | | | |

Comme il ressort de ce tableau, la sélectivité du procédé est dans tous les cas très élevée. On observe que la sélectivité globale augmente avec lorsque le temps de contact entre les réactifs diminue, et/ou lorsque la concentration en CO₂ diminue. Les meilleures sélectivités de l'étape de capture sont obtenues pour la charge globale CO₂/DETA la plus faible possible, c'est-à-dire suffisante pour former un solide. A l'aide des valeurs de concentrations et débits du tableau ci-dessus, il ressort que la valeur minimale du ratio CO₂/DETA permettant d'obtenir un précipité est de 0,5 et donne la meilleure sélectivité. Le rapport maximal de 2,0 donne la sélectivité la plus faible. En outre, en comparant les exemples 3 et 4, on observe que l'insertion d'une étape de recuit dans le procédé permet également d'améliorer la sélectivité de celui-ci.

### Exemple 2 : Influence de l'étape de lavage

Le procédé de l'Exemple 1-6 a été mis en oeuvre, en modifiant l'étape de lavage comme suit. 5 mL d'une solution de lavage ont été ajoutés à environ 100 mg de solide obtenu après séparation de phase. Le mélange a été agité jusqu'à obtenir une suspension homogène. Il a ensuite été centrifugé et le surnageant a été collecté. La procédure a été répétée un nombre voulu de fois et le solide résultant a été séché sous vide.

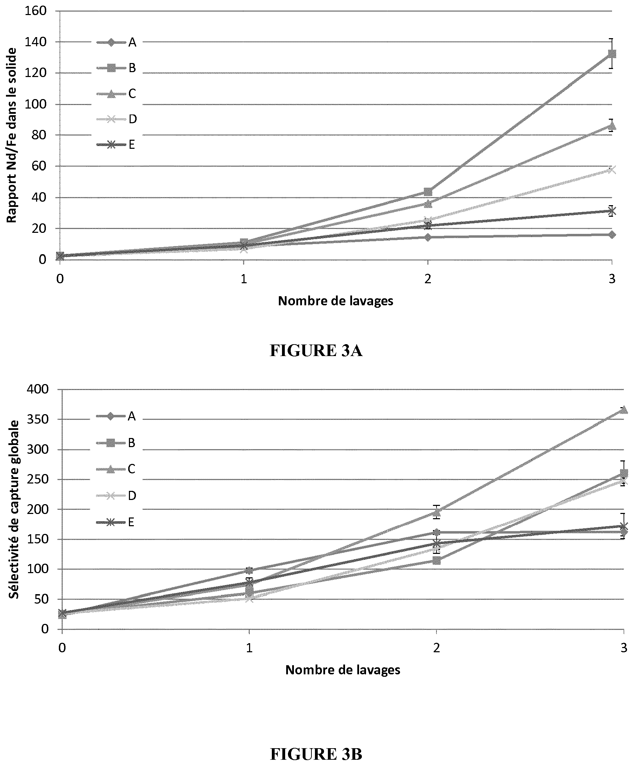

Les résultats obtenus pour 0 à 3 lavages avec différentes solutions de lavage sont présentés sur les Figures 3A et 3B. Les solutions de lavage A à E utilisées étaient les suivantes :
A : méthanol
B : DETA 0,5M dans le méthanol
C : DETA 0,5 M et 0,1 eq. CO₂ dans le méthanol
D : DETA 0,5M et 0,4 eq. CO₂ dans le méthanol
E : DETA 0,5M saturée en CO₂ dans le méthanol

Comme il ressort de la Figure 3A, l'efficacité de séparation des métaux augmente avec le nombre de lavages.

En outre, la Figure 3B montre que la sélectivité optimale est obtenue avec la solution de lavage C, c'est-à-dire avec un mélange de DETA et CO₂ dans le méthanol, dans un rapport molaire CO₂/DETA de 1:10.

Un essai supplémentaire a été réalisé sur un solide généré suivant le procédé de l'Exemple 1, à partir d'un échantillon contenant du néodyme et du fer dans un rapport molaire Nd/Fe de 2,5. Trois lavages ont été effectués à l'aide des solutions de lavage A, B et C ci-dessus.

Les résultats obtenus sont rassemblés dans le tableau ci-dessous :

| Solution de lavage | Rapport atomique Nd/Fe dans le solide | Sélectivité du procédé global |
|---|---|---|
| A | 16,1 | 161 |
| B | 132 | 260 |
| C | 86 | 366 |

Là encore, l'utilisation de la solution C permet d'obtenir la meilleure sélectivité.

### Exemple 3 (comparatif) : procédé de capture en discontinu (batch)

Dans cet exemple, la phase liquide L est composée de deux métaux différents Nd et Pr mais appartenant à la même famille, à savoir au bloc f du tableau périodique.

### ETAPE A) :

Préparation d'une phase liquide L correspondant à la solution 1, de composition :
- 2,08 * 10⁻³ mole (soit 1,009g) de trifluoroacétate de néodyme ;
- 2,08 * 10⁻³ mole (soit 0,999g) de trifluoroacétate de praséodyme ;
- 0,05 mole (soit 5,158 g) de diéthylènetriamine ;
- 100 mL d'un solvant organique qui est du méthanol.

### ETAPE B) :

La solution 1 est chauffée à reflux, mise sous atmosphère de CO₂ puis ramenée à température ambiante. La suspension est centrifugée, le surnageant prélevé et le solide lavé trois fois avec 20 mL de méthanol puis séché.

### Résultats

**Tableau 1 :**

| Entrée | Solution | débit gaz (ml/min) | débit solution (ml/min) | Masse (g) | % Nd récupéré | % Pr récupéré | S (Pr/Nd) |
|---|---|---|---|---|---|---|---|
| 1 | 1 | - | - | 1,811 | 84,5 | 87,3 | 1,26 |

| Entrée | Solution | % CF₃CO₂⁻ récupéré | % DETA récupéré | | | | |
|---|---|---|---|---|---|---|---|
| 1 | 1 | 26,2 | 28,4 | | | | |

### Composition de la phase concentrée :

**Tableau 2 :**

| Entrée | Solution | Masse (g) | DETA (mol%) | Nd (mol%) | Pr (mol%) | CF₃CO₂⁻ (mol%) | CO₂ (mol%) |
|---|---|---|---|---|---|---|---|
| 1 | 1 | 1,811 | 33,2 | 4,5 | 4,6 | 8 | 50,9 |

### ETAPE C) :

On suspend 200 mg du précipité issu de la solution 1 dans 25 ml d'une solution de relargage et on chauffe sous reflux à 65°C, pendant une durée de 10 min.

Le précipité contient :
- 8,54 * 10⁻⁴ mole de DETA ;
- 2,3 * 10⁻⁴ mole de métaux.

La solution de relargage contient :
- 3,9 * 10⁻³ mole de DETA ;
- 7,62 * 10⁻⁴ mole de sel d'ammonium monotrifluoroacétate de DETA, ce qui représente environ trois fois la quantité molaire de métaux présents dans le précipité ;
- le tout dans du méthanol.

En d'autres termes, la quantité molaire totale en amine dans le précipité et la solution de relargage est de 5,52 * 10⁻³ mole. Cette quantité molaire représente environ 24 équivalents molaires par rapport au métal total contenu dans le précipité.

### ETAPE D) :

La solution homogène résultante est alors traitée selon l'étape B) de capture comme décrite précédemment.

Dans ces conditions, on récupère 32,7 % de Pr et 35,6 % de Nd, soit une sélectivité de 1,14.

## Revendications

1. Procédé de capture et/ou de détection d'au moins un élément chimique dans un échantillon, comprenant les étapes suivantes :
a) on prépare une phase liquide L comprenant au moins :
- une amine;
- un échantillon comprenant au moins un élément chimique choisi dans le groupe comprenant les métaux pauvres, les alcalino-terreux, les actinides, les terres rares, les métaux de transition, et leur combinaison;
- éventuellement un solvant;
b) on met en contact la phase liquide L avec une phase gazeuse G comprenant un gaz choisi parmi CO₂, COS et CS₂, dans des conditions entraînant la formation d'un écoulement segmenté, de sorte à former une troisième phase concentrant ledit élément chimique, dite « phase concentrée », en suspension dans une solution mère ;
c) on sépare la phase concentrée de la solution mère.

2. Procédé selon la revendication 1, **caractérisé en ce que** la phase concentrée se présente sous forme solide.

3. Procédé selon l'une des revendications précédentes, **caractérisé en ce que** l'échantillon contient exclusivement deux éléments chimiques appartenant au bloc f.

4. Procédé selon la revendication 3, **caractérisé en ce que** l'échantillon contient exclusivement au moins un élément chimique appartenant au bloc f, tel que le samarium (Sm), le néodymium (Nd), le lanthane (La), le dysprosium (Dy), l'yttrium (Y) et au moins un élément chimique appartenant au bloc d, tel que le cobalt (Co), le fer (Fe) et le nickel (Ni).

5. Procédé selon l'une des revendications précédentes, **caractérisé en ce qu'**avant mise en contact des phases gazeuse G et liquide L :
- dans la phase liquide L :
- la concentration molaire en amine est comprise entre 10⁻³ et 20 mol/L ;
- la concentration molaire en élément chimique est comprise entre 10⁻⁵ et 7 mol/L ;
- et/ou dans la phase gazeuse G:
- la pression partielle en gaz est comprise entre 0,1 et 1 bar.

6. Procédé selon l'une des revendications précédentes, **caractérisé en ce que** :
- la vitesse superficielle d'écoulement de la phase liquide L, V_{s,L}, est comprise entre 1 µm/s et 10 m/s, avantageusement comprise entre 100 µm/s et 1 mis ;
- la vitesse superficielle d'écoulement de la phase gazeuse G, V_{s,G}, est comprise entre 1 µm/s et 10 m/s, avantageusement comprise entre 100 µm/s et 1 m/s.

7. Procédé selon l'une des revendications précédentes, **caractérisé en ce que** la phase gazeuse contient du CO₂ et **en ce que** le rapport molaire du CO₂ à l'amine est compris entre 0,1:1 et 2 : 1 et est préférentiellement de 0,3:1 à 0,5:1.

8. Procédé selon l'une quelconque des revendications 1 à 7, **caractérisé en ce que** le rapport molaire amine/métal est compris entre 2 :1 et 96 :1, plus préférentiellement entre 2 :1 et 20 :1, par exemple entre 10 :1 et 15 :1.

9. Procédé selon l'une quelconque des revendications 1 à 8, **caractérisé en ce qu'**il comprend une étape supplémentaire de relargage consistant à suspendre la phase concentrée dans une solution comprenant l'amine, la même amine mais protonée et accompagnée d'un contre ion, et le cas échéant le solvant, dans des proportions identiques à celles présentes dans la solution mère après séparation de la phase concentrée.

10. Procédé selon la revendication 9, **caractérisé en ce que** pendant l'étape de relargage, le rapport de la quantité molaire totale d'amine à la quantité molaire totale d'éléments chimiques est compris entre 3 et 128, avantageusement compris entre 6 et 24.

11. Procédé selon l'une quelconque des revendications 1 à 8, **caractérisé en ce qu'**il comprend une étape supplémentaire de relargage consistant à laver la phase concentrée à l'aide d'un solvant pouvant contenir au moins une amine et éventuellement un gaz réactif, de préférence le CO₂.

12. Procédé selon la revendication 11, **caractérisé en ce que** la solution de lavage renferme un solvant, une amine et du CO₂ dans un rapport molaire du CO₂ à l'amine de 1 :20 à 1 :3, de préférence de 1 :15 à 1 :5, par exemple de 1 :10.

13. Installation pour la mise en oeuvre du procédé selon l'une des revendications 1 à 12, **caractérisée en ce qu'**elle comprend au moins:
- une unité de stockage d'une phase liquide L comprenant au moins :
• une amine ;
• un échantillon comprenant au moins un élément chimique choisi parmi les métaux pauvres, les alcalino-terreux, les actinides, les terres rares, les métaux de transition, et leur combinaison ;
• éventuellement un solvant ;
- une unité de stockage d'une phase gazeuse G,
- une unité de réaction alimentée par deux entrées, respectivement une entrée de phase liquide L depuis l'unité de stockage de phase liquide L, et une entrée de phase gazeuse G depuis l'unité de stockage de phase gazeuse G, l'unité de réaction comprenant un micro-mélangeur, constitué d'une chambre de micro-mélange et de segmentation, connecté à une conduite tubulaire en sortie du micro-mélangeur,
- un moyen d'alimentation en continu en phase liquide L de l'unité de réaction,
- un moyen d'alimentation en continu en phase gazeuse G de l'unité de réaction,
- un moyen de séparation connecté à la sortie de la conduite tubulaire.

14. Installation selon la revendication 13, **caractérisée en ce que** l'unité de réaction présente :
- un diamètre hydraulique compris entre 50 µm et 5 mm,
- une longueur comprise entre 10 cm et 50 m.

15. Utilisation du procédé selon l'une des revendications 1 à 12 pour séparer des éléments chimiques différents ou pour détecter la présence ou non d'éléments chimiques au sein d'un échantillon, lesdits éléments chimiques étant choisis dans le groupe comprenant les métaux pauvres, les alcalino-terreux, les actinides, les terres rares, les métaux de transition, et leur combinaison.

## Patentansprüche

1. Verfahren zur Erfassung und/oder zum Nachweis mindestens eines chemischen Elements in einer Probe, umfassend die folgenden Schritte:
a) eine flüssige Phase L wird hergestellt, umfassend mindestens:
- ein Amin;
- eine Probe, die mindestens ein chemisches Element umfasst, das aus der Gruppe ausgewählt wird, die schlechte Metalle, Erdalkalimetalle, Aktiniden, seltene Erden, Übergangsmetalle und deren Kombination umfasst;
- gegebenenfalls ein Lösungsmittel;
b) die flüssige Phase L wird mit einer Gasphase G, die ein aus CO₂, COS und CS₂ ausgewähltes Gas enthält, unter Bedingungen in Kontakt gebracht, die zur Bildung einer segmentierten Strömung führen, um so eine dritte Phase zu bilden, die das chemische Element konzentriert, genannt "konzentrierte Phase", suspendiert in einer Stammlösung;
c) die konzentrierte Phase wird von der Stammlösung abgetrennt.

2. Verfahren nach Anspruch 1, **dadurch gekennzeichnet, dass** die konzentrierte Phase in fester Form vorliegt.

3. Verfahren nach einem der vorhergehenden Ansprüche, **dadurch gekennzeichnet, dass** die Probe ausschließlich zwei chemische Elemente enthält, die zu den f-Block-Elementen gehören.

4. Verfahren nach Anspruch 3, **dadurch gekennzeichnet, dass** die Probe ausschließlich mindestens ein chemisches Element enthält, das zum f-Block gehört, wie Samarium (Sm), Neodym (Nd), Lanthan (La), Dysprosium (Dy), Yttrium (Y). ) und mindestens ein chemisches Element, das zum d-Block gehört, wie Kobalt (Co), Eisen (Fe) und Nickel (Ni).

5. Verfahren nach einem der vorhergehenden Ansprüche, **dadurch gekennzeichnet, dass** vor dem Inkontaktbringen der Gasphasen G und Flüssigkeit L
- in der flüssigen Phase L:
• die molare Aminkonzentration zwischen 10⁻³ und 20 mol/L liegt;
• die molare Konzentration des chemischen Elements zwischen 10⁻⁵ und 7 mol/L liegt;
- und/oder in der Gasphase G:
• der Gaspartialdruck zwischen 0,1 und 1 bar liegt.

6. Verfahren nach einem der vorhergehenden Ansprüche, **dadurch gekennzeichnet, dass**:
die Oberflächenströmungsgeschwindigkeit der flüssigen Phase L, V_{s,L}, zwischen 1 µm/s und 10 m/s, liegt, vorteilhafterweise zwischen 100 µm/s und 1 m/s;
die Oberflächenströmungsgeschwindigkeit der Gasphase G, V_{s,G}, zwischen 1 µm/s und 10 m/s liegt, vorteilhafterweise zwischen 100 µm/s und 1 m/s.

7. Verfahren nach einem der vorhergehenden Ansprüche, **dadurch gekennzeichnet, dass** die Gasphase CO₂ enthält und dass das Molverhältnis von CO₂ zu Amin zwischen 0,1:1 und 2:1 liegt und vorzugsweise 0,3:1 bis 0,5:1 beträgt.

8. Verfahren nach einem der Ansprüche 1 bis 7, **dadurch gekennzeichnet, dass** das Molverhältnis Amin/Metall zwischen 2:1 und 96:1, besonders bevorzugt zwischen 2:1 und 20:1,. zum Beispiel zwischen 10:1 und 15:1 liegt.

9. Verfahren nach einem der Ansprüche 1 bis 8, **dadurch gekennzeichnet, dass** es einen zusätzlichen Freisetzungsschritt umfasst, der darin besteht, die konzentrierte Phase in einer Lösung zu suspendieren, die das Amin, dasselbe Amin, jedoch protoniert und von einem Anti-Ion begleitet, enthält und gegebenenfalls das Lösungsmittel in Anteilen, die mit denen in der Stammlösung nach der Abtrennung der konzentrierten Phase identisch sind.

10. Verfahren nach Anspruch 9, **dadurch gekennzeichnet, dass** während des Freisetzungsschritts das Verhältnis der gesamten molaren Menge an Amin zur gesamten molaren Menge an chemischen Elementen zwischen 3 und 128, vorteilhafterweise zwischen 6 und 24, liegt.

11. Verfahren nach einem der Ansprüche 1 bis 8, **dadurch gekennzeichnet, dass** es einen zusätzlichen Freisetzungsschritt umfasst, der darin besteht, die konzentrierte Phase mit Hilfe eines Lösungsmittels zu waschen, das mindestens ein Amin und möglicherweise ein reaktives Gas, vorzugsweise CO₂, enthalten kann.

12. Verfahren nach Anspruch 11, **dadurch gekennzeichnet, dass** die Waschlösung ein Lösungsmittel, ein Amin und CO₂ in einem Molverhältnis von CO₂ zu Amin von 1:20 bis 1:3, vorzugsweise von 1:15 bis 1:5, beispielsweise von 1:10 enthält.

13. Anlage zur Durchführung des Verfahrens nach einem der Ansprüche 1 bis 12, **dadurch gekennzeichnet, dass** sie mindestens umfasst:
- eine Speichereinheit für eine flüssige Phase L, umfassend mindestens:
• ein Amin;
• eine Probe, die mindestens ein chemisches Element enthält, ausgewählt aus: schlechten Metallen, Erdalkalien, Aktiniden, seltenen Erden, Übergangsmetallen und ihrer Kombination;
• möglicherweise ein Lösungsmittel;
- eine Speichereinheit für eine Gasphase G,
- eine Reaktionseinheit, die über zwei Eingänge versorgt wird, jeweils einen Eingang der Flüssigphase L von der Speichereinheit der Flüssigphase L und einen Eingang der Gasphase G von der Speichereinheit der Gasphase G, wobei die Reaktionseinheit Folgendes umfasst: einen Mikromischer, bestehend aus einer Mikromisch- und Segmentierungskammer, die mit einer Rohrleitung am Ausgang des Mikromischers verbunden ist,
- ein Mittel zur kontinuierlichen Versorgung der Reaktionseinheit mit der flüssigen Phase L,
- ein Mittel zur kontinuierlichen Versorgung der Reaktionseinheit mit der Gasphase G,
- ein Mittel zu Trennung, das mit dem Auslass der Rohrleitung verbunden ist.

14. Anlage nach Anspruch 13, **dadurch gekennzeichnet, dass** die Reaktionseinheit Folgendes aufweist:
- einen hydraulischen Durchmesser zwischen 50 µm und 5 mm,
- eine Länge zwischen 10 cm und 50 m.

15. Verwendung des Verfahrens nach einem der Ansprüche 1 bis 12 zur Trennung verschiedener chemischer Elemente oder zum Nachweis der Anwesenheit oder Abwesenheit chemischer Elemente in einer Probe, wobei diese chemischen Elemente aus der Gruppe ausgewählt werden, die schlechte Metalle, Erdalkalien, Aktiniden, Seltene Erden, Übergangsmetalle und ihre Kombination umfasst.

## Claims

1. A process for capturing and/or detecting at least one chemical element in a sample, comprising the following steps:
a) a liquid phase L is prepared comprising at least:
- an amine;
- a sample comprising at least one chemical element selected from the group comprising poor metals, alkaline earths, actinides, rare earths, transition metals, and combination thereof;
- optionally a solvent;
b) the liquid phase L is contacted with a gas phase G comprising a gas selected from CO₂, COS and CS₂, under conditions resulting in the formation of a segmented flow, so as to form a third phase concentrating said chemical element, called "concentrated phase", suspended in a stock solution;
c) the concentrated phase is separated from the stock solution.

2. The process according to claim 1, **characterized in that** the concentrated phase is in solid form.

3. The process according to one of the preceding claims, **characterized in that** the sample contains exclusively two chemical elements belonging to block f.

4. The process according to claim 3, **characterized in that** the sample contains exclusively at least one chemical element belonging to block f, such as samarium (Sm), neodymium (Nd), lanthanum (La), dysprosium (Dy), yttrium (Y) and at least one chemical element belonging to block d, such as cobalt (Co), iron (Fe) and nickel (Ni).

5. The process according to one of the preceding claims, **characterized in that** before contacting the gas G and liquid L phases:
- in the liquid phase L:
- the molar amine concentration is comprised between 10⁻³ and 20 mol/L;
- the molar concentration of chemical element is comprised between 10⁻⁵ and 7 mol/L;
- and/or in the gas phase G:
- the gas partial pressure is comprised between 0.1 and 1 bar.

6. The process according to one of the preceding claims, **characterized in that**:
- the surface flow speed of the liquid phase L, V_{s,L}, is comprised between 1 µm/s and 10 m/s, advantageously comprised between 100 µm/s and 1 m/s;
- the surface flow speed of the gas phase G, V_{s,G}, is comprised between 1 µm/s and 10 m/s, advantageously comprised between 100 µm/s and 1 m/s.

7. The process according to one of the preceding claims, **characterized in that** the gas phase contains CO₂ and **in that** the molar ratio of CO₂ to the amine is comprised between 0.1:1 and 2:1 and is preferably from 0.3:1 to 0.5:1.

8. The process according to any one of claims 1 to 7, **characterized in that** the amine/metal molar ratio is comprised between 2:1 and 96:1, more preferably between 2:1 and 20:1, for example between 10:1 and 15:1.

9. The process according to any one of claims 1 to 8, **characterized in that** it comprises an additional release step consisting of suspending the concentrated phase in a solution comprising the amine, the same amine but protonated and accompanied by a counter ion, and where appropriate the solvent, in proportions identical to those present in the stock solution after separation of the concentrated phase.

10. The process according to claim 9, **characterized in that** during the release step, the ratio of the total molar amount of amine to the total molar amount of chemical elements is comprised between 3 and 128, advantageously comprised between 6 and 24.

11. The process according to any one of claims 1 to 8, **characterized in that** it comprises an additional release step consisting of washing the concentrated phase using a solvent which may contain at least one amine and optionally a reactive gas, preferably CO₂.

12. The process according to claim 11, **characterized in that** the washing solution contains a solvent, an amine and CO₂ in a molar ratio of CO₂ to amine of 1:20 to 1:3, preferably 1:15 to 1:5, for example 1:10.

13. An installation for implementing the process according to one of claims 1 to 12, **characterized in that** it comprises at least:
- a storage unit for a liquid phase L comprising at least:
• an amine;
• a sample comprising at least one chemical element selected from poor metals, alkaline earths, actinides, rare earths, transition metals, and combination thereof;
• optionally a solvent;
- a storage unit for a gas phase G,
- a reaction unit supplied by two inputs, respectively a liquid phase L inlet from the liquid phase L storage unit, and a gas phase G inlet from the gas phase G storage unit, the reaction unit comprising a micro-mixer, consisting of a micro-mixing and segmentation chamber, connected to a tubular pipe at the outlet of the micro-mixer,
- means for continuously supplying liquid phase L to the reaction unit,
- means for continuously supplying gas phase G to the reaction unit,
- separation means connected to the outlet of the tubular pipe.

14. The installation according to claim 13, **characterized in that** the reaction unit has:
- a hydraulic diameter comprised between 50 µm and 5 mm,
- a length comprised between 10 cm and 50 m.

15. A use of the process according to one of claims 1 to 12 to separate different chemical elements or to detect the presence or absence of chemical elements within a sample, said chemical elements being selected from the group comprising poor metals, alkaline earths, actinides, rare earths, transition metals, and combination thereof.
